# EUROPEAN PATENT APPLICATION

(11) **EP 3 091 344 A2**
(43) Date of publication of application: **09.11.2016**
(21) Application number: 16168319.8
(22) Date of filing: 04.05.2016
(51) Int. Cl.: G01M 3/02, G01M 3/40, E21B 43/16

(54) **PROCESS FOR DETECTING A LEAK IN A SUBSEA PIPELINE**

(30) Priority: 04.05.2015 US 201562156546 P
(71) Applicant: Shell Internationale Research Maatschappij B.V., 2596 HR Den Haag (NL)
(72) Inventor: LOOIJER, Mark, Theodoor, 22 RIJSWIJK (NL)
(74) Representative: Matthezing, Robert Maarten

(57) **Abstract**

A process for detecting a leak in a subsea pipeline supplying enhanced oil recovery fluid to an oil-bearing formation which process comprises:
(a) supplying the enhanced oil recovery fluid to the formation via the subsea pipeline which fluid has a salinity which differs from sea water at the location of the pipeline, and
(b) comparing the salinity of water surrounding the supply pipeline with the salinity of sea water at the location of the pipeline.

## Description

The present invention relates to leak detection in subsea pipelines to supplying enhanced oil recovery fluid to an oil-bearing formation.

In the recovery of oil from a subterranean formation, only a portion of the oil in the formation generally is recovered using primary recovery methods utilizing the natural formation pressure to produce the oil. A portion of the oil that cannot be produced from the formation using primary recovery methods may be produced by chemical enhanced oil recovery, also referred to as improved oil recovery or EOR.

An enhanced oil recovery method comprises injecting enhanced oil recovery fluid into a formation. The fluid can be an aqueous solution containing surfactant, polymer or a combination of surfactant and polymer to flood an oil-bearing formation to increase the amount of oil recovered from the formation. The oil recovery fluid is injected into an oil-bearing formation to increase recovery of oil from the formation, either after primary recovery or after a secondary recovery water flood. Without wishing to be bound by any theory, it is thought that surfactant enhances recovery of oil by lowering interfacial tension between oil and water phases in the formation thereby mobilizing the oil for production. Polymer is thought to increase the viscosity of the enhanced oil recovery oil recovery formulation, preferably to the same order of magnitude as the oil in the formation in order to force the mobilized oil through the formation for production by the polymer containing flood.

It is difficult to detect a leak in the supply of the enhanced oil recovery fluid if the pipeline is at the bottom of the sea especially in deep water while subsea ecological systems can be especially vulnerable. Therefore, it would be good if it would be possible to detect any leak in an easy and straightforward way.

We have now found a surprisingly simple and effective method to detect such leaks.

The present invention relates to a process for detecting a leak in a subsea pipeline supplying enhanced oil recovery fluid to an oil-bearing formation which process comprises: (a) supplying the enhanced oil recovery fluid to the formation via the subsea pipeline which fluid has a salinity which differs from sea water at the location of the pipeline, and (b) comparing the salinity of water surrounding the supply pipeline with the salinity of sea water at the location of the pipeline.

The salinity of the water surrounding the supply pipeline is the salinity just outside the pipeline where the salinity will be influenced by a leak. An option is to measure this salinity at a distance of at most 300 cm from the pipeline, more preferably at a distance of at most 200 cm from the pipeline, more preferably of at most 100 cm from the pipeline.

The salinity of the sea water at the location of the pipeline is the average salinity of the sea water close to the pipeline which salinity is not influenced by a leak. The salinity of sea water tends to be relatively constant which makes that in many instances a single value can be used for the salinity of the sea water at the location of the pipeline for the full length of the pipeline which is being checked. This salinity can for example be determined at a distance of more than 3 meters from the pipeline, more preferably at a distance of at least 5 meters from the pipeline.

The vast majority of seawater has a salinity of between 3.1 and 3.8 %wt. of salt which makes it possible to reliably differ the salinity of the recovery fluid by ensuring that the salinity of the enhanced oil recovery fluid is well outside this range. In this context, the salinity is the total dissolved solids content of a fluid (measured according to ASTM D5907, and referred to as TDS hereafter). It will be clear that the salinity of the recovery fluid can be lower than 31,000 ppm, more specifically at most 30,000 ppm, more specifically at most 25,000 ppm, more specifically at most 20,000 ppm. The expression "ppm" indicates parts per million by weight on total weight amount present.

Alternatively, the TDS of the recovery fluid transported through the pipeline is higher than 38,000 ppm, more specifically at least 40,000 ppm, more specifically at least 45,000 ppm. The larger the difference between the TDS of the recovery fluid and the TDS of the sea water, the easier it is to measure and detect any leak. On the other hand, the TDS of the recovery fluid generally should not be too high as water of high TDS can be detrimental to the interfacial tension between oil and formation. The fluid is typically designed to produce an ultra-low interfacial tension between oil and water in the formation resulting in a stable micro-emulsion of oil and water which micro-emulsion may be pushed through the formation for production and recovery from the formation. The fluid is designed for this effect by selecting or tailoring the surfactant(s) of the fluid at the salinity of the formation water. However, the interfacial tension between formation oil and water also is sensitive to the salt concentration of the recovery fluid. The salinity of the recovery fluid may be formulated by adapting the total salt concentration of the recovery fluid to match the salinity of the formation water. These considerations make it clear that the salinity of the recovery fluid depends on circumstances but can be made to be outside the salinity of the sea water at the location in question. Furthermore, it could be considered to apply a pair of pipes of which one pipe transports the recovery fluid while the other would transport the dilution water which needs not to be monitored as any spill will not have an environmental impact.

Various reliable ways nowadays are available to establish whether the salinity of the water directly surrounding a subsea pipeline differs from the salinity of the sea water at the location in question. A suitable method involves measuring the electrical conductivity of the sea water. The electrical conductivity can be measured in any way known to be suitable. A method which is considered especially suitable is the use of a remotely operated vehicle containing equipment to measure the electrical conductivity. This vehicle preferably travels frequently along the pipeline.

The recovery fluid for use in the present invention can contain polymer and/or surfactant.

The surfactant preferably is effective in reducing the interfacial tension between oil and water in the oil-bearing formation and thereby mobilizing the oil for production from the formation. The surfactant may be an anionic surfactant. The anionic surfactant may be a sulfonate-containing compound, a sulfate-containing compound, a carboxylate compound, a phosphate compound, or a blend thereof. The anionic surfactant may be chosen from the group consisting of an alpha olefin sulfonate compound, an internal olefin sulfonate compound, a branched alkyl benzene sulfonate compound, a propylene oxide sulfate compound, an ethylene oxide sulfate compound, a propylene oxide-ethylene oxide sulfate compound, or a blend thereof.

The anionic surfactant preferably contains from 12 to 28 carbons, or from 12 to 20 carbons. The surfactant of the oil recovery formulation may comprise an internal olefin sulfonate compound containing from 15 to 18 carbons or a propylene oxide sulfate compound containing from 12 to 15 carbons, or a blend thereof, where the blend contains a volume ratio of the propylene oxide sulfate to the internal olefin sulfonate compound of from 1:1 to 10:1.

The surfactant generally is present as part of an oil recovery formulation which can contain further compounds. The oil recovery formulation may contain an amount of the surfactant effective to reduce the interfacial tension between oil and water in the formation and thereby mobilize the oil for production from the formation. The oil recovery formulation may contain from 0.05 wt.% to 5 wt. % of the surfactant or combination of surfactants, or may contain from 0.1 wt. % to 3 wt.% of the surfactant or combination of surfactants based on total amount of formulation. This amount can be gradually decreased during operation when the amount of surfactant recovered from the crude oil gradually increases and the wash water re-injected into the formation start to contain a substantial amount surfactant.

The oil formulation can also contain further compounds such as polymers and alkali.

Polymer can be present to provide the oil recovery formulation with a viscosity of the same order of magnitude as the viscosity of oil in the formation under formation temperature conditions so the oil recovery formulation may drive mobilized oil across the formation for production from the formation with a minimum of fingering of the oil through the oil recovery formulation and/or fingering of the oil recovery formulation through the oil. The polymer can be a single compound or can be a mixture of compounds. Preferably, the polymer is selected from the group consisting of polyacrylamide; partially hydrolyzed polyacrylamide; polyacrylate; ethylenic co-polymer; carboxymethylcelloluse; polyvinyl alcohol; polystyrene sulfonate; polyvinylpyrrolidone; biopolymers; 2-acrylamide-methyl propane sulfonate (AMPS); styrene-acrylate copolymer; co-polymers of acrylamide, acrylic acid, AMPS and n-vinylpyrrolidone in any ratio; and combinations thereof.

Examples of ethylenic co-polymers include co-polymers of acrylic acid and acrylamide, acrylic acid and lauryl acrylate, and lauryl acrylate and acrylamide. Examples of biopolymers include xanthan gum, guar gum, schizophyllan and scleroglucan.

Most preferably, the polymer is (hydrolyzed) polyacrylamide. The latter includes but is not limited to copolymers of acrylamide and acrylic acid or sodium acrylate such as polymers which are being sold by SNF Floerger under the trade name Flopaam 3630S, Flopaam 6030S and Flopaam EM533.

The concentration of the polymer in the oil recovery formulation mother liquor may be substantially higher than the concentration of the oil recovery formulation actually injected into the formation. The concentration of polymer in this mother liquor can be of from 80 to 80,000 ppm, more specifically of from 1250 to 50000 ppm, more specifically of from 2500 to 25000 ppm, most specifically of from 5000 to 10000 ppm based on total amount of formulation.

The concentration of the polymer in the oil recovery formulation to be injected into the formation preferably is sufficient to provide the oil recovery formulation with a dynamic viscosity of at least 0.3 mPa s (0.3 cP), more specifically at least 1 mPa s (1 cP), or at least 10 mPa s (10 cP), or at least 100 mPa s (100 cP), or at least 1000 mPa s (1000 cP) at 25°C or at a temperature within a formation temperature range. The concentration of polymer in the oil recovery formulation preferably is from 250 ppm to 10000 ppm, or from 500 ppm to 5000 ppm, or from 1000 to 2000 ppm.

The molecular weight number average of the polymer in the oil recovery formulation preferably is at least 10000 daltons, or at least 50000 daltons, or at least 100000 daltons. The polymer preferably has a molecular weight number average of from 10000 to 30000000 daltons, or from 100000 to 15000000 daltons.

Furthermore, the oil formulation can be prepared with alkali so that the formulation which is injected has a pH of at least 8, more specifically at least 8.5, most specifically at least 9. In order to prevent damage to the formation, the pH preferably is at most 12, more specifically at most 11, most specifically at most 10.5. The oil formulation can further contain a low molecular weight alcohol as co-solvent, preferably in an amount of from 100 ppm to 50000 ppm of the total oil recovery formulation. Furthermore, the formulation can contain ammonia, preferably liquid ammonia and most preferably liquid ammonia in an amount of from 0.01 wt.% to 5 wt.% of the total weight of the formulation.

The TDS of the water used for preparing the recovery fluid can vary widely and depends on the availability of sources at the actual site. Generally, the TDS will be of from 1000 to 50,000 ppm, more specifically of from 5,000 to 50,000 ppm.

## Claims

1. A process for detecting a leak in a subsea pipeline supplying enhanced oil recovery fluid to an oil-bearing formation which process comprises:
(a) supplying the enhanced oil recovery fluid to the formation via the subsea pipeline which fluid has a salinity which differs from sea water at the location of the pipeline, and
(b) comparing the salinity of water surrounding the supply pipeline with the salinity of sea water at the location of the pipeline.

2. A process according to claim 1 in which the difference between the salinity of the water surrounding the supply pipeline and the salinity of the sea water is assessed by measuring their electrical conductivity.

3. A process according to claim 1 or 2 in which the salinity of the water surrounding the pipeline is regularly compared with the salinity of the sea water at the location of the pipeline by a remotely operated vehicle travelling along the pipeline.

4. A process according to any one of claims 1 to 3 in which the oil recovery fluid comprises polymer and/or surfactant.

5. A process according to claim 4 in which the oil recovery fluid comprises polyacrylamide.

6. A process according to claim 4 or 5 in which the oil recovery fluid comprises alkyl sulfate.

7. A process according to any one of claims 1-6, in which the oil recovery fluid has a total dissolved solids content (TDS) of 25,000 or less.

8. A process according to any one of claims 1-6, in which the oil recovery fluid has a total dissolved solids content (TDS) of 45,000 or more.
